# EUROPEAN PATENT APPLICATION

(11) **EP 0 940 595 A1**
(43) Date of publication of application: **08.09.1999**
(21) Application number: 99301690.6
(22) Date of filing: 05.03.1999
(51) Int. Cl.: F16D 3/84, F16J 3/04

(54) **Protective gaiters for joints**

(30) Priority: 06.03.1998 GB 9804864
(71) Applicant: Hayward, Philip Fields, Chorley Lancashire PR7 6HP (GB)
(72) Inventor: Hayward, Philip Fields, Chorley Lancashire PR7 6HP (GB)
(74) Representative: Goodwin, Mark

(57) **Abstract**

A protective rubber gaiter (10) is used for fitting around a constant velocity joint of a motor vehicle and has a tubular body (10) with a slit (22) along its entire length. The slit (22) is bounded by edges (23,24) which have inclined mating surfaces extending inwardly of the peripheries (28,29,32,33) of the edges. In preferred gaiters (10), the mating surfaces are U-shaped or V-shaped. The gaiter (10) is wrapped around the assembed joint and the two edges (23,24) of the slit (22) are then sealed together using adhesive. The gaiter (10) is then attached to the joint members using circlips or ties.

## Description

This invention relates to protective gaiters for joints particularly although not exclusively for use in motor vehicles.

Flexible rubber gaiters are used in motor cars to protect constant velocity joints so as to prevent ingress of dirt and moisture and to prevent escape of lubricants. These gaiters customarily comprise moulded tubes having cylindrical end portions suitable diametered to fit the joint members and a flexible convoluted central portion.

UK patents 2156452 and 2232729 described moulded rubber gaiters of this kind which have end portions which can be cut away to fit different dimensions of joint members.

UK patent 2156916 describes a split gaiter which can be fitted around a joint without first requiring the joint to be dismantled. Once in position, the gaiter is joined at the edges bounding the split by means of adhesive.

It is known to use mating tongue-and-groove conformations along the entire length of the edges and a contact adhesive of the pressure-sensitive cyano-acrylate kind. The tongue and groove conformations facilitate accurate location of the edges which is of course particularly important when working with pressure-sensitive adhesives in conditions of restricted access under a motor vehicle.

However, tongue-and-groove conformations can be difficult to interengage during installation and a bonding weakness may arise due to formation of a gap between parts of the conformations.

An object of the present invention is to provide a split gaiter having edges which can be securely bonded together, with easy-fitting locating conformations.

According to one aspect of the invention therefore there is provided a protective gaiter to fit around a joint comprising a tubular body with first and second ends and a central flexible portion between said ends and having a slit along its entire length, said slit being bounded by edges having mating conformations extending longitudinally of the slit which can be bonded together to close said slit, characterised in that the conformations have corresponding inclined surfaces extending inwardly from peripheries of the edges.

With this arrangement, the mating conformations can readily interfit insofar as the inclined surfaces can slide over each other into a desired position, and secure bonding can be attained as a consequence of attainment of a desired face-to-face mating contact of the conformations.

The tooling required for manufacturing tongue and groove can be expensive, of delicate construction with critical tolerances and thus liable to failure.

With the arrangement of the above invention, the tooling tolerances are less critical and less liable to failure. Significant reduction in mould costs can therefore be achieved.

Furthermore, the arrangement of the invention allows for thinner gaiter walls than typically allowed for by tongue and groove conformations. (These are normally a minimum of approximately 3mm thick). Thus the flexibility of the gaiter can be increased, by decreasing the wall thickness of the gaiter.

The flexibility of one or more particular regions of the gaiter may be increased by decreasing the wall thickness in those regions. The flexibility of the gaiter may therefore be varied throughout the body of the gaiter, to suit the particular application.

According to a second aspect of the present invention there is provided a method of installing a gaiter around a joint defined between first and second joint members using a flexible sheet shaped in the form of a tubular body with first and second ends and a central portion between the ends and having a slit along its length, whereby the sheet is wrapped around the joint, opposite edges of the sheet bounding said slit which have mating conformations therealong are bonded together to close said slit and the said first and second ends are fixed respectively to the two joint members to form said installed gaiter having at least one fold in the central portion, characterised in that the mating conformations have corresponding inclined surfaces extending inwardly from the peripheries of the edges which are bonded in abutting contact with each other.

With regard to the mating conformations, these may take any suitable form, but preferably, they are such that the surfaces readily adopt a desired location relative to each other. The conformations may be interengageable in a predetermined position relative to each other at which they interlock in a transverse direction and the inclined surfaces may be slidable relative to each other into this position.

Preferably, in this predetermined position, the wall thickness of the tubular body around the joined slit, is substantially uniform.

The conformations may generally be of the nature of tongue and groove conformations having a projecting portion along one edge substantially in the circumferential or tangential direction and a corresponding recess along the other edge.

Most preferably the mating conformations have surfaces which contact each other in the mated position to facilitate secure bonding.

Thus, the conformations may comprise parallel faces set at a common inclination. Preferably, the faces have a common curvature of an even or angular shape such as a V-shape or a U-shape, whereby the faces have cooperable conformations.

If desired the faces may be configured or roughened to facilitate bonding.

In a particularly preferred embodiment, when bonded together the wall thickness of the tubular body is uniform around its periphery with a smooth join at the slit with no significant bulges, steps or protrusions thereat.

The tubular body is preferably made from flexible rubber material. The edges may be bonded together with any suitable adhesive. Preferably a cyano acrylate touch or pressure-activated cement is used, but other cements, adhesives or solvents are also possible. The adhesive should desirably set quickly on contact or application of pressure although preferably this should be after a short delay of say a few seconds to permit positional adjustment.

With regard to the ends of the tubular body, these may be formed with single fixing sections or with multiple stepped or conically inclined sections, as described in the above mentioned patents, to permit fixing to joint members of different diameters. The central portion may have a single fold, or multiple folds, preferably in the form of multiple concertina folds, also as described in the above mentioned patents.

The gaiter of the invention may have a single slit whereby the tubular body is formed from a one piece sheet. If desired however, there may be two or more slits whereby the body is formed from two or more shells or sheets. The two or more slits may have the same or different arrangement of edge conformations.

The invention will now be described further by way of example only and with reference to the accompanying drawings in which:-
- Figure 1: is a sectional side view of one form of gaiter according to the invention;
- Figure 2: is a detail to an enlarged scale showing in perspective view parts of edges bounding a slit of the gaiter;
- Figure 3: is a sectional view of different parts of the closed-up slit; and
- Figure 4: is a sectional view of different parts of a closed-up slit of another form of gaiter according to the invention.

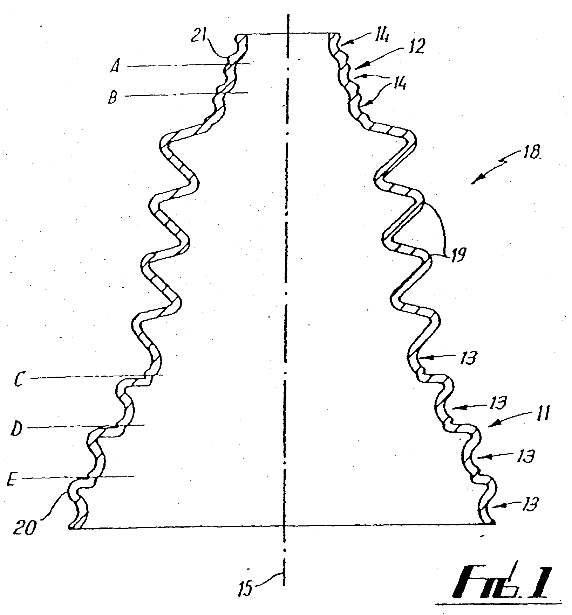

The gaiter of figure 1 comprises a one-piece moulded rubber tube 10 generally of frusto-conical form.

The end portions 11, 12 of the tube are each stepped to define a number of annular fitting sections 13, 14 of progressively increasing diameter which extend parallel to the tube axis 15. At the wider end of the tube 10 there are four such sections 13 increasing in diameter towards the pertaining free end. At the narrower end there are three such sections 14 decreasing in diameter towards the pertaining free end. The end portions 11, 12 are suitably configured and adapted such that a relatively large amount of flexibility is permitted therein both transversely of and parallel to the tube axis 15. On its outer surface each section 13 have a curved central annular surface having at one end a groove 16 and upstanding rib 17. Each section 14 is bounded at each end thereof by an upstanding rib. Thus the outer surfaces of the end portions 11, 12 are convoluted defining multiple folds 20, 21 which not only allow axial flexibility but can also conveniently accommodate suitably configured projecting lips on the joint members.

The central portion 18 of the gaiter is formed into multiple convolutions 19 which allow such section to flex and also to extend axially.

With the gaiter 10 formed as above it will be appreciated that such gaiter is readily flexible along the entire length of the tubular body and not solely in the region of the central portion 18 thereof.

The gaiter 10 has a slit 22 along its entire length so that it is formed as a one-piece shaped rubber sheet. The slit 22 is bounded by edges 23, 24 which have conformations therealong.

The conformations are generally of the nature of tongue and groove conformations having a projecting portion along one edge and a corresponding recess or channel along the other edge.

The tongue and groove conformations 25 are each of a common length and have corresponding inclined surfaces extending inwardly from peripheries of the edges (28, 29, 32, 33).

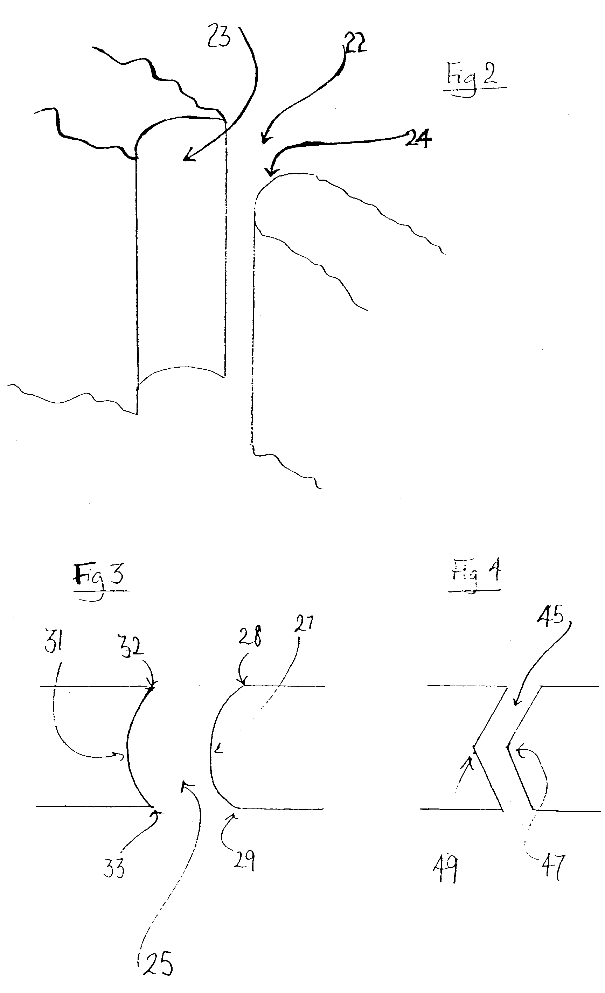

As shown in Figs. 2 & 3, the tongue 27 of each tongue and groove conformation 25 comprises a U-shaped projection which extends along the pertaining edge 24 and projects in the circumferential or tangential direction of the gaiter wall. The corresponding channel 31 comprises a U-shaped channel of substantially equal length to the projection 27. The channel 31 projects inwardly along the pertaining edge 23.

As shown in Fig. 3, the depth of the channel 31 is substantially the same as the height of the projection 27. Thus the projection 27 can be readily fully inserted into the channel 31 in intimate face-to-face contact with the channel 31.

Fig. 4 shows another possible conformation 45 which is generally of a tongue and groove conformation, having a V-shaped projection along one edge and a corresponding V-shaped channel 49 along the other edge.

Both configurations readily interfit in so far as the inclined surfaces, extending inwardly from the peripheries of the edges, can slide over each other into the desired, predetermined position in which the conformations engage and are interlocked in a transverse direction.

The drawings 2-4 show the edges 23, 24 as being straight edges for the sake of convenience. As will be apparent from Fig. 1, the edges are in fact convoluted and the projections 27 or 47 and channels 31 or 49 will be correspondingly convoluted.

In use, the slit 22 is opened up and the gaiter 10 is wrapped around an assembled joint (such as a motor car constant velocity joint). The slit 22 is then closed after first applying pressure-activated cement of the cyanoacrylate adhesive kind to the surfaces of the projection 27 and the channel 31, of each of the conformations 25.

The projection 27 is readily inserted into the channel 31 in the correct position by sliding the projection into the channel, positioning being facilitated by the corresponding inclined surfaces which slide over each other into the desired position. The edges 23, 24 are pressed together to achieve bonding contact between projection 27 and the channel 31.

The gaiter wall is of uniform thickness around the gaiter periphery and the closed-up bonded slit 22 is secured and sealed and presents smooth surfaces without steps, bulges or protrusions at the inside and outside of the gaiter wall.

The abutting surfaces of the projection 27 and channel 31 are securely bonded together and prevent pealing of the edges 23, 24 along the slit 22. This results in a surprisingly powerful bond.

The gaiter is then secured in position (after filling with a suitable lubricant) by clamping one of the sections 13 at the wider end around one joint member and one of the sections 14 at the narrower end around the other joint member.

Sections 13, 14, which are outwardly of the sections which are clamped in position may be cut away at respective ones of the positions identified by letters A-E on the drawing.

The sections 13, 14 are clamped in position by circlips or the like around the outer surfaces of the sections. The inner surface of the end portions 11, 12 can be suitably adapted in order to provide an efficient seal around the joint member.

The length of the gaiter 10 is adjusted as required by extension or contraction of the entire gaiter and in this respect the gaiter is manufactured so as to be capable of such deformation.

It is of course to be understood that the invention is not intended to be restricted to the details of the above embodiment which are described by way of example only.

## Claims

1. A protective gaiter to fit around a joint comprising a tubular body with first and second ends and a central flexible portion between said ends and having a slit along its entire length, said slit being bounded by edges having mating conformations extending longitudinally of the slit which can be bonded together to close said slit, characterised in that the conformations have corresponding inclined surfaces extending inwardly from peripheries of the edges.

2. A method of installing a gaiter around a joint defined between first and second joint members using a flexible sheet shaped in the form of a tubular body with first and second ends and a central portion between the ends and having a slit along its length, whereby the sheet is wrapped around the joint, opposite edges of the sheet bounding said slit which have mating conformations therealong are bonded together to close said slit and the said first and second ends are fixed respectively to the two joint members to form said installed gaiter having at least one fold in the central portion, characterised in that the mating conformations have corresponding inclined surfaces extending inwardly from the peripheries of the edges which are bonded in abutting contact with each other.

3. A protective gaiter according to claim 1 or claim 2 incorporating conformations having a projecting portion along one edge substantially in the circumferential or tangential direction and a corresponding recess along the other edge.

4. A protective gaiter according to any preceding claim in which the mating confirmations are interengageable in a predetermined relative position at which they interlock in a transverse direction and the inclined surfaces are slidable relative to each other into this position.

5. A protective gaiter according to any preceding claim incorporating conformations having parallel faces set at a common inclination.

6. A protective gaiter according to claim 5 in which the faces are U-shaped.

7. A protective gaiter according to claim 5 in which the faces are V-shaped.

8. A protective gaiter according to any preceding claim incorporating two or more splits whereby the body is formed from two or more sheets.
